# EUROPÄISCHE PATENTANMELDUNG

(11) **EP 4 620 703 A1**
(43) Veröffentlichungstag der Anmeldung: **24.09.2025**
(21) Anmeldenummer: 25161611.6
(22) Anmeldetag: 04.03.2025
(51) Int. Cl.: B60C 15/00

(54) **FAHRZEUGREIFEN**

(30) Priorität: 20.03.2024 DE 102024108008
(71) Anmelder: Continental Reifen Deutschland GmbH, 30175 Hannover (DE)
(72) Erfinder: Dr. Biabanaki, Seyedomidreza, 30175 Hannover (DE)
(74) Vertreter: Continental Corporation

(57) **Zusammenfassung**

Die Erfindung betrifft einen Fahrzeugreifen (3) mit einem Laufflächenbereich und zwei Wulstbereichen (1) sowie zwei Seitenwandbereichen (2), wobei die Seitenwandbereiche (2) den Laufflächenbereich und die Wulstbereiche (1) miteinander verbinden, wobei die Wulstbereiche (1) jeweils einen Wulstkern (4) aufweisen. Die Seitenwandbereiche (2) weisen eine Innenschicht, eine Karkasslage (7) mit einem Karkassumschlag (9) und eine Kautschukschicht auf.

## Beschreibung

Die Erfindung betrifft einen Fahrzeugreifen mit einem Laufflächenbereich und zwei Wulstbereichen sowie zwei Seitenwandbereichen, wobei die Seitenwandbereiche den Laufflächenbereich und die Wulstbereiche miteinander verbinden, wobei die Wulstbereiche jeweils einen Wulstkern aufweisen. Die Seitenwandbereiche weisen eine Innenschicht, eine Karkasslage mit einem Karkassumschlag und eine Kautschukschicht auf.

Karkassumschläge sind hinlänglich bekannt, wobei insbesondere das Ende der Karkasslage, insbesondere bei hoch belasteten Fahrzeugreifen, aufgrund verschiedener Mechanismen zu Reifenbeschädigungen und Reifenversagen führen. Durch das Einlaufen in den Reifenlatsch bewegt sich der Bereich des Karkassumschlags nach axial außen, wobei die Kraft von der innen verlaufenden Karkasslage über Kautschukschichten auf den Karkassumschlag übertragen wird. Es findet somit eine Kraftübertragung in überwiegend axialer Richtung statt. Zusätzlich entsteht in der innen verlaufenden Karkasslage eine Zugbelastung, die um den Wulstkern herumgeleitet wird und in den Bereich des Karkassumschlag eingeleitet wird. Die Zugbelastung führt zu einer Relativbewegung des Karkassumschlags zu den sie umgebenden Kautschukschichten, wobei die Relativbewegung im Reifenquerschnitt entlang der Haupterstreckungsachse der Karkasslage verläuft. Die beiden genannten Kräfte und die daraus entstehenden Bewegungen bewirken, dass am Ende des Karkassumschlags Beschädigungen, insbesondere Risse in Kautschukschichten entstehen können, die zu weiteren Beschädigungen des Reifens und dessen Ausfall führen können.

Es gibt verschiedene Ansätze die genannten Beschädigungsmechanismen zu verringern, diese weisen jedoch Nachteile auf, beispielsweise, dass sie einen alternativen Beschädigungsmechanismus hervorrufen, zu einem erhöhtem Rollwiderstand führen oder aber sehr aufwendig und kostenintensiv in ihrer Herstellung sind.

Die JP 2000225816A offenbart einen Fahrzeugreifen, wobei der Karkassumschlag in einem Querschnitt des Fahrzeugreifens eine Krümmung aufweist, die bis oberhalb der Oberkante des Wulstkerns verläuft, wobei sie dem Querschnitt des Wulstkerns folgt. Es folgt eine weitere Krümmung, die über einen Winkel von 90° verläuft. Dieser Krümmung folgt ein zigzagförmiger Verlauf der Karkasslage mit zwei weiteren Krümmungen.

Vor diesem Hintergrund liegt der Erfindung die Aufgabe zugrunde, einen Fahrzeugreifen derart auszuführen, dass er einfacher Weise herzustellen ist, wobei die Gefahr einer Reifenbeschädigung ausgehend vom Karkassumschlag verringert wird, wobei ein Rollwiderstand nicht oder nicht wesentlich erhöht wird.

Diese Aufgabe wird gelöst mit einem Fahrzeugreifen gemäß den Merkmalen des Patentanspruches 1. Die Unteransprüche betreffen besonders zweckmäßige Weiterbildungen der Erfindung.

Erfindungsgemäß ist also ein Fahrzeugreifen mit einem Laufflächenbereich und zwei Wulstbereichen sowie zwei Seitenwandbereichen vorgesehen, wobei die Seitenwandbereiche den Laufflächenbereich und die Wulstbereiche miteinander verbinden. Die Wulstbereiche weisen jeweils einen Wulstkern auf, wobei die Seitenwandbereiche eine Innenschicht, eine Karkasslage mit einem Karkassumschlag und eine Kautschukschicht aufweisen. Der Karkassumschlag bildet in einem Querschnitt des Fahrzeugreifens drei Abschnitte aus, wobei ein erster Abschnitt eine erste Krümmung aufweist, wobei die erste Krümmung dem Querschnitt des einen Wulstkerns folgt. Ein zwischen dem ersten Abschnitt und einem dritten Abschnitt angeordneter zweiter Abschnitt weist eine zweite Krümmung auf, wobei die zweite Krümmung einen minimalen Biegeradius von nicht größer als 30 mm aufweist und der Biegeradius der zweiten Krümmung zumindest über einen Winkel von 70° verläuft. Der dritte Abschnitt weist einen ersten geradlinigen Verlauf auf, wobei sich der erste geradlinige Verlauf zumindest über eine Strecke von 4 mm erstreckt. Der Abstand des ersten geradlinigen Verlaufs steigt mit sich erhöhendem Abstand zum zweiten Abschnitt in einem Winkel von 5° bis 45° von der auf dem gleichen Umfang verlaufenden inneren Karkasslage.

Die innen verlaufende Karkasslage geht in den Karkassumschlag über, und zwar an der Stelle, an der sich die innen verlaufende Karkasslage axial innen des Wulstkernes auf dem äußeren Umfang des Wulstkernes befindet. Der den Wulstkern umragende Bereich der Karkasslage ist ein Teilbereich des Karkassumschlags.

Unter einem geradlinigen Verlauf ist nicht nur ein geradliniger Verlauf im mathematischen Sinne zu verstehen, sondern auch Verläufe der Karkasslage entlang von sehr großen Radien, wobei sehr große Radien zumindest größer als 50 cm sind, bevorzugt jedoch größer als 100 cm und am meisten bevorzugt größer als 200 cm sind mit.

Der Verlauf der Karkasslage im Bereich des Karkassumschlags, insbesondere die zweite Krümmung mit einem Biegeradius kleiner als 30 mm und einem Winkel von über 70° mit dem sich anschließenden ersten geradlinigen Verlauf, der einen Winkel von 5° bis 45° zu der inneren Karkasslage ausbildet, führt zu einem Verlauf des Karkassumschlags, der eine minimale Krafteinwirkung auf das Ende des Karkassumschlags erzeugt. Der schlaufenförmige Verlauf des Karkassumschlags verringert die Zugbelastung am Ende des Karkassumschlags. Die Ausrichtung des Endes des Karkassumschlags in einem Winkel von 5° bis 45° zu der inneren Karkasslage führte dazu, dass die überwiegend axial verlaufende Druckkraft von der inneren Karkasslage, die durch die Kautschukschichten übertragen werden, senkrecht oder nahezu senkrecht auf den Karkassumschlag auftritt, wodurch eine Relativbewegung zwischen dem Karkassumschlag und des den Karkassumschlag umgegebenen Kautschuks minimiert wird. Der Winkel von über 70° sowie der Biegeradius von kleiner als 30 mm der zweiten Krümmung ermöglicht es, die gewünschte Geometrie wulstkernnah auszuführen. Hierdurch wird der Einfluss auf den Rollwiderstand minimiert sowie ein besonders robuster Fahrzeugreifen ermöglicht, da das Ende des Karkassumschlags auf einem Fahrzeugreifenumfang mit hohen Materialstärken positioniert wird, der auch hierdurch besonders robust ist. Die Wirkung des Endes des Karkassumschlags als Ausgangspunkt für Reifenbeschädigungen wird minimiert.

Eine bevorzugte Ausführungsform sieht vor, dass der Biegeradius der ersten Krümmung über einen Teilkreis realisiert wird, wobei der Teilkreis zumindest über einen Winkel von 190°, bevorzugt zumindest 210° und weiter bevorzugt zumindest 220° und am meisten bevorzugt zumindest über 230° verläuft. Unter Teilkreis wird hierbei nicht nur eine Kreisform im mathematischen Sinne verstanden, sondern auch an eine Kreisform angenäherte Geometrien, also insbesondere kleinere Abweichungen, insbesondere über 30% oder bevorzugt 20% und weiter bevorzugt um 10% des mittleren Biegeradius, des Biegeradius über den Verlauf der Kreisform, werden als Kreisform verstanden.

Eine weitere bevorzugte Ausführungsform sieht vor, dass der minimale Biegeradius der ersten Krümmung zumindest 4 mm, bevorzugt zumindest 8 mm, weiter bevorzugt zumindest 16 mm und weiter bevorzugt zumindest 24 mm entspricht und beziehungsweise oder maximal 110 mm, bevorzugt 80 mm, weiter bevorzugt 50 mm und weiter bevorzugt 40 mm entspricht.

Eine weitere bevorzugte Ausführungsform sieht vor, dass sich der erste geradlinige Verlauf zumindest über eine Strecke von 5 mm, bevorzugt 8 mm und weiter bevorzugt 10 mm erstreckt und bevorzugt ein freies Ende aufweist. Der geradlinige Verlauf über eine Strecke von zumindest 5 mm stellt eine effektive Verringerung der Zugbelastung an dem der zweiten Krümmung abgewandten Ende sicher.

Eine weitere bevorzugte Ausführungsform sieht vor, dass die zweite Krümmung von der ersten Krümmung beabstandet ist, bevorzugt durch einen zweiten geradlinigen Verlauf, insbesondere eines geradlinigen Verlaufs über zumindest 3 mm, bevorzugt 4,5 mm, weiter bevorzugt 6 mm und weiter bevorzugt 8 mm. Der geradlinige Verlauf mit einer Länge von zumindest 3 mm zwischen der ersten Krümmung und der zweiten Krümmung führt zu einer besonders effektiven Verringerung der Zugbelastung an dem Ende des Karkassumschlags.

Eine weitere bevorzugte Ausführungsform sieht vor, dass der minimale Biegeradius der zweiten Krümmung 1 mm, bevorzugt zumindest 1,5 mm, weiter bevorzugt zumindest 2 mm und weiter bevorzugt zumindest 4 mm entspricht und beziehungsweise oder maximal 30 mm, bevorzugt 20 mm, weiter bevorzugt 15 mm und weiter bevorzugt 10 mm entspricht.

Eine weitere bevorzugte Ausführungsform sieht vor, dass der Biegeradius der zweiten Krümmung über zumindest einen Winkel von 70°, bevorzugt 75°, weiter bevorzugt 80°, weiter bevorzugt 85°, weiter bevorzugt 90° und beziehungsweise oder maximal über einen Winkel von 110°, bevorzugt 105°, weiter bevorzugt 100° und weiter bevorzugt 95° verläuft. Durch einen Winkel in diesem Winkelbereich wird eine besonders effektive Zugentlastung auf das Ende des Karkassumschlags erzeugt, wobei zugleich eine bevorzugte Ausrichtung zur inneren Karkasslage erzeugt wird.

Eine weitere bevorzugte Ausführungsform sieht vor, dass der Biegeradius der zweiten Krümmung in den ersten geradlinigen Verlauf übergeht, insbesondere einen ersten geradlinigen Verlauf, der, senkrecht zur äußeren Reifenoberfläche gemessen, mit einem Abstand zur äußeren Reifenoberfläche von zumindest 8 mm, bevorzugt 10 mm, weiter bevorzugt 12 mm und weiter bevorzugt 15 mm, endet. Vorteilhafterweise geht die zweite Krümmung unmittelbar in den ersten geradlinigen Verlauf über, da hierdurch ein einfacher und kompakter Aufbau des Karkassumschlags erreicht wird, der vorteilhaft hinsichtlich der Haltbarkeit und des Rollwiderstands des Reifens ist. Ein Ende des geradlinigen Verlauf mit einem Abstand von zumindest 8 mm zur äußeren Reifenoberfläche wirkt einer Rissinduzierung im Kautschuk vor.

Eine weitere bevorzugte Ausführungsform sieht vor, dass der Abstand des ersten geradlinigen Verlaufs mit sich erhöhendem Abstand zum zweiten Abschnitt in einem Winkel von 10° bis 45°, bevorzugt 15° bis 30°, von der auf dem gleichen Umfang innen verlaufenden Karkasslage steigt. Der sich erhöhende Abstand des ersten geradlinigen Verlaufs von der innen verlaufenden Karkasslage mit den genannten Winkelbereichen stellt eine besonders bevorzugte möglichst senkrechte Krafteinleitung von der inneren Karkasslage Karkasslage auf den Karkassumschlag sicher.

Eine weitere bevorzugte Ausführungsform sieht vor, dass der geringste Abstand zwischen der zweiten Krümmung und der inneren Karkasslage 1 mm, bevorzugt 1,5 mm, weiter bevorzugt 2 mm, weiter bevorzugt 2,5 mm und weiter bevorzugt 3 mm beträgt. Je größer der Abstand zwischen der zweiten Krümmung und der inneren Karkasslage ist, je geringer sind die sich einstellenden Scherkräfte und je unwahrscheinlicher ist eine Beschädigung ausgelöst durch die Scherkräfte.

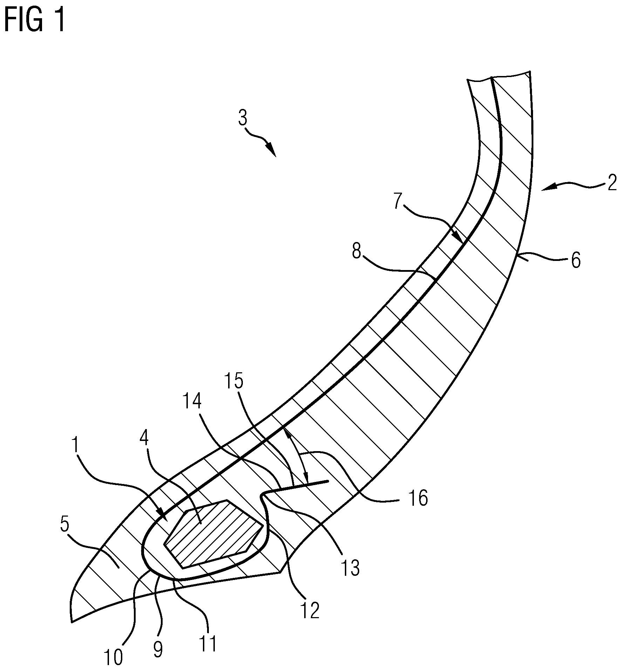

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
Fig. 1 einen Querschnitt eines Wulstbereiches und eines Seitenwandbereichs eines Fahrzeugreifens.

Figur 1 zeigt einen Querschnitt eines Wulstbereiches 1 und eines Seitenwandbereichs 2 eines Fahrzeugreifens 3. Der Wulstbereich 1 weist einen Wulstkern 4 auf und bettet den Wulstkern 4 in eine Kautschukschicht 5 ein, wobei die Kautschukschicht 5 auch eine äußere Reifenoberfläche 6 ausbildet. Um den Wulstkern 4 herum verläuft eine Karkasslage 7, die in der Figur 1 linksseitig oberhalb des Wulstkerns 4 eine innere Karkasslage 8 sowie um den Wulstkern 4 herum sowie rechtsseitig des Wulstkerns 4 einen Karkassumschlag 9 ausbildet.

Der Karkassumschlag 9 weist einen ersten Abschnitt 10 auf, der mit der inneren Karkasslage 8 in Kontakt steht. Der erste Abschnitt 10 beginnt auf dem äußeren Umfang des Wulstkerns 4 auf der Reifeninnenseite und verläuft entlang einer ersten Krümmung 11 entlang des Wulstkerns 4. Der erste Abschnitt 10 steht mit seinem weiteren Ende mit einem zweiten Abschnitt 12 in Kontakt, wobei der zweite Abschnitt 12 eine zweite Krümmung 13 aufweist. Die Krümmung der zweiten Krümmung 13 verläuft gegensinnig zu der ersten Krümmung 11 und weist einen Biegeradius von nicht mehr als 30 mm auf. Sie verläuft über einen Winkel von 90°. Dem zweiten Abschnitt 12 schließt sich ein dritter Abschnitt 14 an, der einen ersten geradlinigen Verlauf 15 aufweist. Der erste geradlinige Verlauf 15 weist eine Krümmung auf, die mit der zweiten Krümmung 13 gleichsinnig verläuft und weist einen Biegeradius von 150 cm auf. Der erste geradlinige Verlauf 15 erstreckt sich über 12 mm und endet mit einem Abstand von 10 mm zur äußeren Reifenoberfläche 6. Der erste geradlinige Verlauf 15 verläuft in einem Winkel 16 von 30° zu der inneren Karkasslage 8, die sich auf dem gleichen Reifenumfang befindet.

### Bezugszeichenliste

- 1: Wulstbereich
- 2: Seitenwandbereich
- 3: Fahrzeugreifen
- 4: Wulstkern
- 5: Kautschukschicht

- 6: äußere Reifenoberfläche
- 7: Karkasslage
- 8: innere Karkasslage
- 9: Karkassumschlag
- 10: erste Abschnitt

- 11: erste Krümmung
- 12: zweite Abschnitt
- 13: zweite Krümmung
- 14: dritte Abschnitt
- 15: erste geradlinige Verlauf

- 16: Winkel

## Patentansprüche

1. Fahrzeugreifen (3) mit einem Laufflächenbereich und zwei Wulstbereichen (1) sowie zwei Seitenwandbereichen (2), wobei die Seitenwandbereiche (2) den Laufflächenbereich und die Wulstbereiche (1) miteinander verbinden, wobei die Wulstbereiche (1) jeweils einen Wulstkern (4) aufweisen,
wobei die Seitenwandbereiche (2) eine Innenschicht, eine Karkasslage (7) mit einem Karkassumschlag (9) und eine Kautschukschicht aufweisen,
wobei der Karkassumschlag (9) in einem Querschnitt des Fahrzeugreifens (3) drei Abschnitte ausbildet, wobei ein erster Abschnitt (10) eine erste Krümmung (11) aufweist, wobei die erste Krümmung (1) dem Querschnitt des einen Wulstkerns (4) folgt, wobei ein zwischen dem ersten Abschnitt (10) und einem dritten Abschnitt (14) angeordneter zweiter Abschnitt (12) eine zweite Krümmung (13) aufweist, **dadurch gekennzeichnet, dass**
die zweite Krümmung (13) einen minimalen Biegeradius von nicht größer als 30 mm aufweist und der Biegeradius der zweiten Krümmung (13) zumindest über einen Winkel von 70° verläuft, wobei der dritte Abschnitt (14) einen ersten geradlinigen Verlauf (15) aufweist, wobei sich der erste geradlinige Verlauf (15) zumindest über eine Strecke von 4 mm erstreckt, wobei der Abstand des ersten geradlinigen Verlaufs (15) mit sich erhöhendem Abstand zum zweiten Abschnitt (12) in einem Winkel von 5° bis 45° von der auf dem gleichen Umfang verlaufenden inneren Karkasslage (8) steigt.

2. Fahrzeugreifen (3) nach Anspruch 1, **dadurch gekennzeichnet, dass** der Biegeradius der ersten Krümmung (11) über einen Teilkreis realisiert wird, wobei der Teilkreis zumindest über einen Winkel von 190°, bevorzugt zumindest 210° und weiter bevorzugt zumindest 220° und am meisten bevorzugt zumindest über 230° verläuft.

3. Fahrzeugreifen (3) nach den Ansprüchen 1 oder 2, **dadurch gekennzeichnet, dass** der minimale Biegeradius der ersten Krümmung (11) zumindest 4 mm, bevorzugt zumindest 8 mm, weiter bevorzugt zumindest 16 mm und weiter bevorzugt zumindest 24 mm entspricht und/oder maximal 110 mm, bevorzugt 80 mm, weiter bevorzugt 50 mm und weiter bevorzugt 40 mm entspricht.

4. Fahrzeugreifen (3) nach einem der vorangehenden Ansprüche, **dadurch gekennzeichnet, dass** sich der erste geradlinige Verlauf (15) zumindest über eine Strecke von 5 mm, bevorzugt 8 mm und weiter bevorzugt 10 mm erstreckt und bevorzugt ein freies Ende aufweist.

5. Fahrzeugreifen (3) nach einem der vorangehenden Ansprüche, **dadurch gekennzeichnet, dass** die zweite Krümmung (13) von der ersten Krümmung (11) beabstandet ist, bevorzugt durch einen zweiten geradlinigen Verlauf, insbesondere eines geradlinigen Verlaufs über zumindest 3 mm, bevorzugt 4,5 mm, weiter bevorzugt 6 mm und weiter bevorzugt 8 mm.

6. Fahrzeugreifen (3) nach einem der vorangehenden Ansprüche, **dadurch gekennzeichnet, dass** der minimale Biegeradius der zweiten Krümmung (13) 1 mm, bevorzugt zumindest 1,5 mm, weiter bevorzugt zumindest 2 mm und weiter bevorzugt zumindest 4 mm entspricht und/oder maximal 30 mm, bevorzugt 20 mm, weiter bevorzugt 15 mm und weiter bevorzugt 10 mm entspricht.

7. Fahrzeugreifen (3) nach einem der vorangehenden Ansprüche, **dadurch gekennzeichnet, dass** der Biegeradius der zweiten Krümmung (13) über zumindest einen Winkel von 70°, bevorzugt 75°, weiter bevorzugt 80°, weiter bevorzugt 85°, weiter bevorzugt 90° und/oder maximal über einen Winkel von 110°, bevorzugt 105°, weiter bevorzugt 100° und weiter bevorzugt 95° verläuft.

8. Fahrzeugreifen (3) nach einem der vorangehenden Ansprüche, **dadurch gekennzeichnet, dass** der Biegeradius der zweiten Krümmung (13) in den ersten geradlinigen Verlauf (15) übergeht, insbesondere einen ersten geradlinigen Verlauf (15), der, senkrecht zur äußeren Reifenoberfläche (6) gemessen, mit einem Abstand zur äußeren Reifenoberfläche (6) von zumindest 8 mm, bevorzugt 10 mm, weiter bevorzugt 12 mm und weiter bevorzugt 15 mm, endet.

9. Fahrzeugreifen (3) nach einem der vorangehenden Ansprüche, **dadurch gekennzeichnet, dass** der Abstand des ersten geradlinigen Verlaufs (15) mit sich erhöhendem Abstand zum zweiten Abschnitt (12) in einem Winkel von 10° bis 45°, bevorzugt 15° bis 30°, von der auf dem gleichen Umfang inneren Karkasslage (8) steigt.

10. Fahrzeugreifen (3) nach einem der vorangehenden Ansprüche, **dadurch gekennzeichnet, dass** der geringste Abstand zwischen der zweiten Krümmung (13) und der inneren Karkasslage (8) 1 mm, bevorzugt 1,5 mm, weiter bevorzugt 2 mm, weiter bevorzugt 2,5 mm und weiter bevorzugt 3 mm beträgt.
